# EUROPEAN PATENT APPLICATION

(11) **EP 2 738 460 A1**
(43) Date of publication of application: **04.06.2014**
(21) Application number: 12194834.3
(22) Date of filing: 29.11.2012
(51) Int. Cl.: F23C 99/00

(54) **Combustion system of a flow engine**

(71) Applicant: Siemens Aktiengesellschaft, 80333 München (DE)
(72) Inventor: Dolmansley, Timothy, Worksop, Nottinghamshire S81 8NQ (GB)

(57) **Abstract**

The present invention relates to a combustion system (10, 10a, 10b) of a flow engine (12) comprising a combustion chamber (14, 14a, 14b), wherein a main flame (16) is burnable that is a lean and cold flame.

To obtain good combustion performance and a low emission of waste as well as a stable flame it is provided that an electric field (18) is provided to stabilise the main flame (16) in the combustion chamber (14, 14a, 14b).

## Description

### Field of invention

The present invention relates to a combustion system of a flow engine and its use in a dry low combustion system.

### Art Background

In combustion chambers of gas turbines fuel is burned for generating thermal energy. The combustion chamber comprises a burner body with an injection device with an orifice for injecting fuel into the combustion chamber. Holes are provided near the orifice for injecting cooling medium, which cools the injection device and interacts with the fuel injected from the orifice to create a at least in part lean air/fuel mixture.

In order to achieve a reliable combustion a main flame in the combustion chamber had to be stable and robust. So that the combustion system regains its optimal performance the main flame has to be stabilized. Different methods are known to stabilise the main flame. One is to operate the main flame at a high temperature, like above 1200°C. Disadvantageously, this generates high und harmful amounts of combustion byproducts. Thus, to provide a combustion system with low emissions, there is a need to achieve a lower overall temperature of the combustion. Lower temperatures can be achieved by burning lean air-fuel mixtures. However, such lean flames can be very unstable and only small changes in the equivalence ration can cause a disadvantage and troublesome flame out. From EP 1 110 034 A1 it is known to endow the combustion system with a so called pilot burner, which provides a flame with a high temperature to ignite and stabilize the low temperature main flame. According to the high temperature of the pilot burner flame the overall performance of the combustion system, like temperature or waste emission, is affected negatively.

### Summary of the Invention

It is a first objective of the present invention to provide a combustion system of a flow engine, which provides a good combustion performance and a low emission of waste as well as a stable flame.

It is a further objective of the present invention to provide a use of such a combustion system of a flow engine in a dry low emission combustion system.

These objectives may be solved by a combustion system and a use according to the subject-matter of the independent claims.

According to a first aspect of the present invention, a combustion system of a flow engine is presented, wherein the combustion system comprises a combustion chamber, in which a main flame is burnable that is a lean and cold flame.

It is provided, that an electric field is provided to stabilise the main flame in the combustion chamber. Due to the inventive matter an overall emission, like CO and NOₓ, may be advantageously reduced. Furthermore, the main flame can be efficiently stabilised and thus effortlessly controlled. Additionally, a pilot flame may be omitted. Hence, an overall temperature of the combustion system may be obtained that is otherwise not possible. In addition, such a combustion system can be tuned to specific running conditions to control dynamics.

In this context a flow engine is intended to mean any engine or machine suitable for a person skilled in the art, e.g. a thermal heating plant, a gas turbine or an internal combustion engine. Furthermore, a lean flame is intended to mean a flame with a high ratio between air and fuel (AFR), wherein that ratio is specifically higher than 14:1, preferably higher than 30:1 and advantageously up to 65:1. Moreover, a cold flame is intended to mean a flame with a temperature lower than 2600 K (stoichiometric), preferably lower than 1850 K and most preferably lower than 1800 K.

It is proposed, that the electrical field modifies the combustion rate by increasing the number of a deficient radical, presumably (OH), in the early stage of combustion. The rate of change or in other words the change of the reaction rate of the combustion, because the rate represents a chemical reaction rate of which combustion is one part, is dependent on field strength, which is influenced by an applied voltage, a distance between electrodes and a geometry of (an) electrode(s) (e.g. shape, orientation and polarity). The rate of change in the reaction rate is also dependant on the frequency of application, a pulse width and an equivalence ratio of the flame.

In a preferred embodiment the main flame has an amount of power and the electric field has an amount of power, wherein the power of the electrical field is in a range between 0.001% and 10%, preferably between 0.005% and 5% and most preferably between 0.01% and 1% of the power of the main flame. It should be noted, that the flanking values here and in the following text should fall into the mentioned ranges. Thus, by a use of a main flame with an exemplary power or heat release of 5.5 MW (Mega-Watt) an electric field with a power between 0.55 and 5.5 kW (Kilo-Watt) the latter is sufficient to stabilise the main flame efficiently. By this feature electric fields with very low energy consumption may be used and are enough for maintaining the main flame.

Advantageously, the electrical field has square AC waveforms. To provide an efficient operating combustion system a balance between a velocity of an air/gas flow and a velocity of the flame must be obtained. In a combustion system the flame travels upstream of a gas/air flow. In an often used so called dry low emission combustion system (DLE system) the flame is prohibited or cannot propagate into a neck of a flame tube, for example. This is caused by a higher gas/air velocity in the neck of the flame tube, which is faster than a flame speed. Therefore the flame is stabilised in a fixed position. If the gas/air speed is increased too much then the flame is prohibited to or cannot propagate upstream quickly enough and the flame is blown out. The introduction of an electric field increases the reaction rate and therefore the speed at which the flame burns for a given equivalence ratio. Thus, an increased gas/air velocity at which blow off occurs may be obtained by the square AC waveforms. That, in turn, increases flammability limits. The increase in flammability limits allows either of three things to happen: first the same gas/air flow can be used, resulting in a more stable main flame (no pilot flame is required), second a higher air flow can be used, resulting in a cooler flame, or third the flame can be made smaller for the same equivalence ratio, saving space and reducing a residence time (resulting in lower NOₓ). Generally, it would be also feasible to use other shapes of electrical fields.

According to a further preferred embodiment the electrical field has a frequency between 1 Hz (Hertz) and 50 kHz (Kilo-Hertz), preferably between 10 Hz and 10 kHz and most preferably between 15 Hz to 5 kHz. Due to this, a sufficient and high blow off velocity may be realised. It had been experimentally shown that the higher the frequency the greater the enhancement of the blow off velocity.

According to an alternative embodiment the electrical field may have a frequency between 50 kHz and 1 GHz, thus providing an electrical field with a high capacity to influence the main flame of the combustion system.

When the electric field is a pulsed field the effects are comparable to an AC field but with a greatly reduced energy consumption. In an advantageously embodiment of the invention a pulse of the pulsed electrical field has a pulse width, wherein the pulse width is in a range between 0.1% and 90% of a pulse repetition time of the pulsed electrical field. These values have been experimentally shown to be most effective in controlling the flame. Preferably the range is between 20% and 80%. The pulse repetition time is intended to mean a "time period", which is the time for one complete cycle, e.g. the time from a start of one pulse - a first pulse, for example - to a start of a following next pulse - a second pulse, for example. The pulse repetition time (PRT) or in other words a time between pulses is dependent on the pulse repetition frequency (PRF) of the pulsed field and specifically RPT is 1/PRF. Thus, the pulse width may be determined and adjusted easily according to the used pulse repetition frequency of the pulsed field. Furthermore, the pulse repetition time is a summation of the time when the pulse is on (pulse width) plus a time between an end point of the first pulse and the start of the following second pulse. Hence, it may be understood as one complete cycle, wherein one cycle is the period when the pulse is on (pulse width) and the following period when the pulse is off.

It would be also possible to correlate the pulse width with the time between the end point of the first pulse and the start of the following second pulse. Thus, the pulse width is in a range between 0.1% and 900% of the time between the end point of the first pulse and the start of the following second pulse.

According to a further exemplary embodiment a ratio between the pulse width and the time between two pulses is in a range between 0.2 and 0.8 and is preferably basically 0.5. Due to this, very low energy consumption is needed for controlling the flame. However, it has been experimentally shown that the difference between the effect at 0.2 and 0.5 is small. Practically, this could be very advantageous as the power consumption for a 0.2 pulse is much less than a 0.8 pulse. The improvement between 0.2 and 0.5 is small and may be probably not worth the extra energy consumption. Thus, by using a ratio of 0.2 an energy saving control may be provided.

Moreover, the pulse width may advantageously be in a range between 0.0001 ms (milliseconds) and 5 ms, preferably between 0.0005 ms and 1 ms and most preferably between 0.05 ms and 0.15 ms. These values have been experimentally shown to be most effective in controlling the flame.

In general, it would be also feasible to operate different pulses with different pulse strength and/or different pulse widths and/or that the pulse repetition time may be varied.

Furthermore, preferably the electrical field is provided by a field source, which comprises at least one electrode to apply the electric field. Thus, the electric field may be generated and sustained structurally simple. Favourably, the at least one electrode is arranged adjacent or in near proximity to the combustion chamber. The arrangement may be any position, or orientation feasible for a person skilled in the art, like co-axial to the combustion chamber, basically perpendicular to the combustion chamber or circular around the combustion chamber or at least two electrodes positioned one on either side of the combustion chamber.

Nevertheless, this arrangement should be adapted in such a way that an operational connection between the at least one electrode and the flame could be provided. The effect of the electric field is strongest when e.g. a positive electrode is downstream of the flame and the earth is arranged upstream of the flame or a negative electrode upstream the flame and the earth downstream of the flame. For example, it has been found that there is an increase in flammability limits. Advantageously, the at least one electrode is arranged partly around the combustion chamber. In this context "partly around" is intended to mean that the at least one electrode extends at least over a section of the combustion chamber in a direction of a contour of the combustion chamber and in the case of a round combustion chamber in an circumferential direction of a circumference of the combustion chamber.

In a further advantageous embodiment the at least one electrode is arranged circular around the combustion chamber. Hence, an efficient arrangement and reliable connection between the at least one electrode and the combustion chamber as well as with the main flame burnable inside the combustion chamber may advantageously be provided. Preferably, the at least one electrode is a ring electrode.

Alternatively and/or additionally, the at least one electrode is formed integrally with the combustion chamber. Thus, it may even be possible to integrate the at least one electrode into the production of the combustion chamber that is for example a can and thereby saving manufacturing efforts and costs.

Furthermore, it has been shown that the effect is strongest on the main flame when the at least one electrode is positively charged another electrode is earthed. Alternatively, the same field could be achieved with a negative electrode and earth or even a negative and a positive electrode.

It is further provided, that the at least one electrode is connected to the combustion chamber by at least one connector. Hence, a desirable orientation, location and/or position of the at least one electrode in respect to the combustion chamber may be reliably realised. Moreover, the at least one connector and thus the at least one electrode is moveable in respect to the combustion chamber so that the main flame is moveable in the combustion chamber by a varying location and/or position of the at least one electrode. This is of particular advantage as the main flame could be purposefully moved away, e.g. from hot spots within the combustion chamber. By this a lifetime of the combustion system and its components may be beneficially extended.

According to a further exemplary embodiment a production of waste is reduceable by the use of the electric field. Hence, a combustion system with very low emission can be used and thus saving the environment. In this context "waste" is intended to mean any by-product or combustion product feasible for a person skilled in the art, like unburnt hydrocarbons, CO, NOₓ, SO₂ or the like. In a further advantageous realisation a production of NOₓ is reduceable by the use of the electric field. Consequently, with such combustion system regulations, especially governmental regulations can be usefully fulfilled, which provides a competitive advantage.

According to a further aspect of the present invention, a use of the combustion system of a flow engine in a dry low emission combustion system is presented. Due to the inventive matter an overall emission may be advantageously reduced. Moreover, a system, which can be operated stable and well controlled, can be provided. In addition, such a system may work efficiently without a pilot flame. As a result, a very low overall temperature of the combustion system may be obtained.

The above-described characteristics, features and advantages of this invention and the manner in which they are achieved are clear and clearly understood in connection with the following description of exemplary embodiments which are explained in connection with the drawings.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- FIG 1:: shows a schematic view of a flow engine with an inventive combustion system comprising a combustion chamber with a main flame burning inside the combustion chamber,
- FIG 2:: shows a schematic view of the combustion chamber with a field source,
- FIG 3:: shows a perspective view of the combustion chamber from FIG 2,
- FIG 4:: shows a diagram depicting an exemplary pattern of an electric field applied by the field source from FIG 2,
- FIG 5:: shows a diagram depicting a flow velocity of two experimentally setups one with an applied electric field by the field source from FIG 2 and the other without an electric field in dependency of a fuel/air ratio,
- FIG 6:: shows a diagram depicting a pattern of an equivalence ratio in dependency of a type of the electrical field applied of three experimentally setups with different frequencies of the electrical field applied,
- FIG 7:: shows a perspective view of a first alternative combustion chamber of an annular combustion system and
- FIG 8:: shows a perspective view of a second alternative combustion chamber with an integrally formed electrode.

### Detailed Description

The illustrations in the drawings are schematically. It is noted that in different figures, similar or identical elements are provided with the same reference signs.

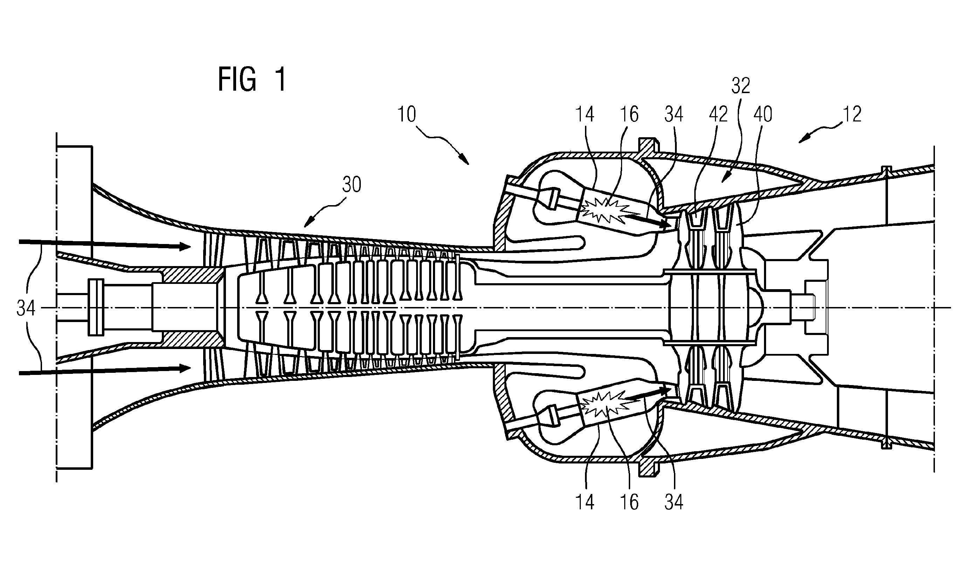

FIG 1 shows in a schematically view a flow engine 12, e.g. a gas turbine. The flow engine 12 comprises a compressor 30, a combustion system 10 and a turbine 32, which are arranged one after another in a flow direction 34 of a flow medium, e.g. air (see arrows pointing from left hand side to right hand side of FIG 1). In the compressor 30 the incoming flow medium is compressed for application to one or more combustors of the combustion system 10. The combustion system 10 comprises a combustion chamber 14. Fuel is introduced into the combustion chambers 14 and is there mixed with a part of the compressed flow medium leaving the compressor 30. Hot gases created by combustion in the combustion chambers 14 are directed to the turbine 32 having a set of turbine blades 40, being guided in the process by a set of guide vanes 42, and the turbine blades 40 and the shaft forming an axis are turned as a result. The turbine blades 40 in turn rotate the blades of the compressor 30, so that the compressed flow medium is supplied by the flow engine 12 itself once this is in operation.

In the combustion chambers 14 a main flame 16 is burnable or burns in a working state of the flow engine 12. This main flame 16 is a lean and cold flame, wherein the flame 16, for example, has an air/fuel ratio (AFR) of about 40:1 and a temperature of about 1800 K. Hence, the combustion system 10 is a so called dry low emission combustion system.

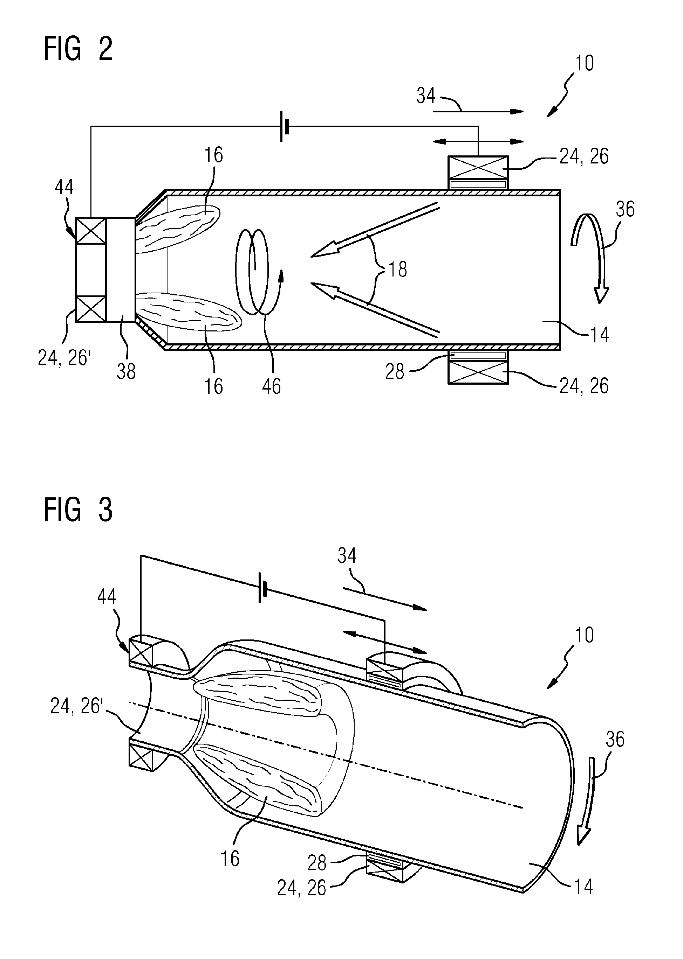

In FIG 2 the combustion chamber 14 is shown schematically in an enhanced view. The combustion chamber 14 is, for example, embodied as a tubular can that extends in flow direction 34. The combustion system 10 comprises two field sources 24 that both are embodied as an electrode 26, 26'. One electrode 26 is connected to the combustion chamber 14 via a connector 28, e.g. a clamping ring, and extends in a circumferential direction 36 of the combustion chamber 14 circular around a whole circumference of the combustion chamber 14. The other electrode 26' is arranged circular around a swirler 44 at a not shown fluid inlet of the combustion chamber 14. Thus, both electrodes 26, 26' can be embodied as a ring electrode. Electrode 26' may also be embodied as a plate electrode. The electrodes 26, 26' are electrically isolated by an electric isolation 38, arranged axially between the swirler 44 and the combustion chamber 14.

Further, the electrodes 26, 26' apply and/or provide an electrical field 18 to stabilise the main flame 16 in the combustion chamber 14, which moves axially in flow direction 46 along the combustion chamber 14 as indicated by a direction arrow. In FIG 3 the combustion chamber 14 is shown in a perspective view to depict the location of the circular flame 16 in a region adjacent to the swirler 44. By means of the electrical field 18 the main flame 16 is able to burn stably and reliably with low temperature and with high air content. Consequently, a production of combustion products or waste, e.g. unburnt hydrocarbons from the fuel, CO, NOₓ or the like, is reduced by the use of the electric field 18. The best results could be obtained, when the electrode 26 is positively and the electrode 26' is negatively charged.

The connector 28 is axially moveable in respect to the combustion chamber 14, as it is shown by the bidirectional arrow in FIG 2. Due to this, the electrode 26 as well as the main flame 16 is also moveable in the combustion chamber 14 by the varying location of the connector 28. As a result, the main flame 16 may be moved away from hot spots in the combustion chamber 14, thus reducing the overall temperature of the combustion system 10.

A power of the electrical field 18 is in a range between 0.001% and 10%, preferably between 0.005% and 5% and most preferably between 0.01% and 0.1% of the power of the main flame 16. For example the power or heat release of the main flame is about 5.5 MW than a power of the electrical field 18 of about 0.55 kW to 5.5 kW is sufficient to stabilise the main flame 16.

It was experimentally shown that the best effects may be obtained when the electrical field 18 has square AC waveforms and has a frequency between 1 Hz and 50 kHz, preferably between 10 Hz and 10 kHz and most preferably between 15 Hz to 5 kHz. In general, the electrical field may have a frequency between 50 kHz and 1 GHz.

Moreover, the results are even better when the electric field 18 is a pulsed field. Several characteristics of the pulsed field may affect the main flame 16, e.g. a pulse width 22 of a pulse 20, a pulse repetition time (PRT) or a time between two pulses 20, 20' (a cycle - shown as 48 on the diagrams) as well as a ratio between the pulse width 22 and the time between two pulses 20, 20'.

An advantage pulse width 22 is in a range between 0.1% and 90% of a pulse repetition time (PRT) of the pulsed electrical field 18. Thus, a favourable ratio between the pulse width 22 and the time between two pulses 20, 20' is in a range between 0.2 and 0.8 and is preferably basically 0.5. According to this ranges the pulse width 22 may be in a range between 0.0001 ms and 5 ms, preferably between 0.0005 ms and 1 ms and most preferably between 0.05 ms and 0.15 ms, for example. Generally, other times may also be feasible.

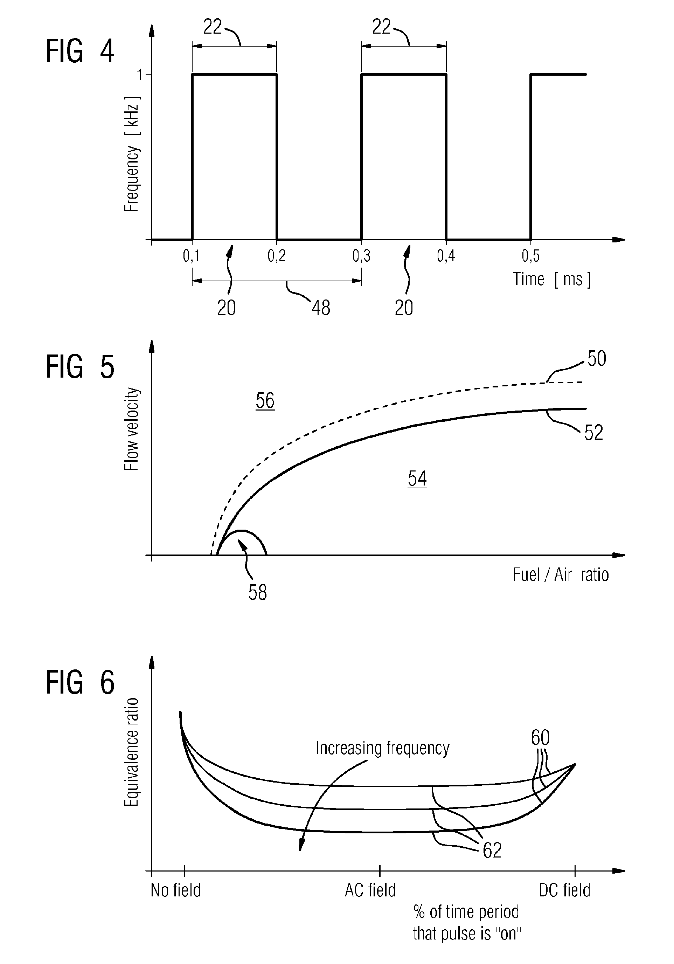

In FIG 4 a diagram depicting an exemplary pattern of an electric field 18 of 1 kHz applied by the electrodes 26, 26' is shown. The x-axis is the time in milliseconds and on the y-axis the frequency in Kilo-Hertz is plotted. The electric field 18 may be applied with a pulse repetition frequency of 5 kHz. Hence, 5000 cycles 48 and pulses 20, 20' occur per second. Therefore, as can be seen in FIG 4 the pulse width 22 may be 0.1 ms and the pulse repetition time (PRT) or the time between two pulses 20, 20' would thus be 0.2 ms. Consequently, the pulse width 22 is 50% of the pulse repetition time (PRT) of the pulsed electrical field 18 or in other words the ratio between the pulse width 22 and the time between the two pulses 20, 20' is 0.5. Moreover, the pulse width 22 is 100% of a time between an end point of the first pulse 20 and a start of the following second pulse 20', which is 0.1 ms.

FIG 5 shows a diagram depicting a pattern of a flow velocity in dependency of a fuel/air ratio for two experimentally setups one with an applied electric field 18 by the field source 24 (graph 50) and the other without an electric field (graph 52). The x-axis is the fuel/air ratio and on the y-axis the flow velocity of the flame 16 is plotted. The graphs 50, 52 show for a burner stabilised flame 16 a region 54 in which the flame 16 will burn and a region 56 in which the flame 16 will blow out. The reason the flame 16 blows out is because the velocity of the gas coming from a burner near the swirler 44 is faster than the velocity at which the flame 16 can travel/burn back downstream in direction 34 of the combustion chamber 14. The flame 16 is prevented from travelling back down the burner as the burner quenches the flame 16 (apart from in a flashback region 58). As can be seen by the greater region 54 and thus the smaller region 56 of the graph 50 the application of an electric field 18 increases the flammability limits of the flame 16.

For a given flow velocity the flame 16 can be made to burn leaner (with less fuel) without blowing out. Lower equivalence ratios of air to fuel mean less fuel. If the flow velocity is kept constant the equivalence ratio at which the flame 16 blows out when the fuel flow is reduced can be seen in FIG 6, which shows a diagram depicting a pattern of the equivalence ratio in dependency of the type of the applied electrical field 18 of three experimentally setups with different frequencies of the electrical field 18 applied. The x-axis is the equivalence ratio and on the y-axis the type of electrical field 18 applied is indicated.

If the "on" time is zero there is no field and if the "on" time is 100% then the field is a DC field. When the "on" time is 50% then it is a square AC waveform.

As can be seen by the pattern of the graphs 60 of the three different conditions there is a very flat bottomed curve 62 between 20% and 80% "on" time, where the equivalent ratio is basically constant. The equivalent ratio decreases by increased frequency of the electric field 18 applied as it is indicate by the positions of the graphs 60 of the three different conditions in respect to one another and symbolised by the arrow.

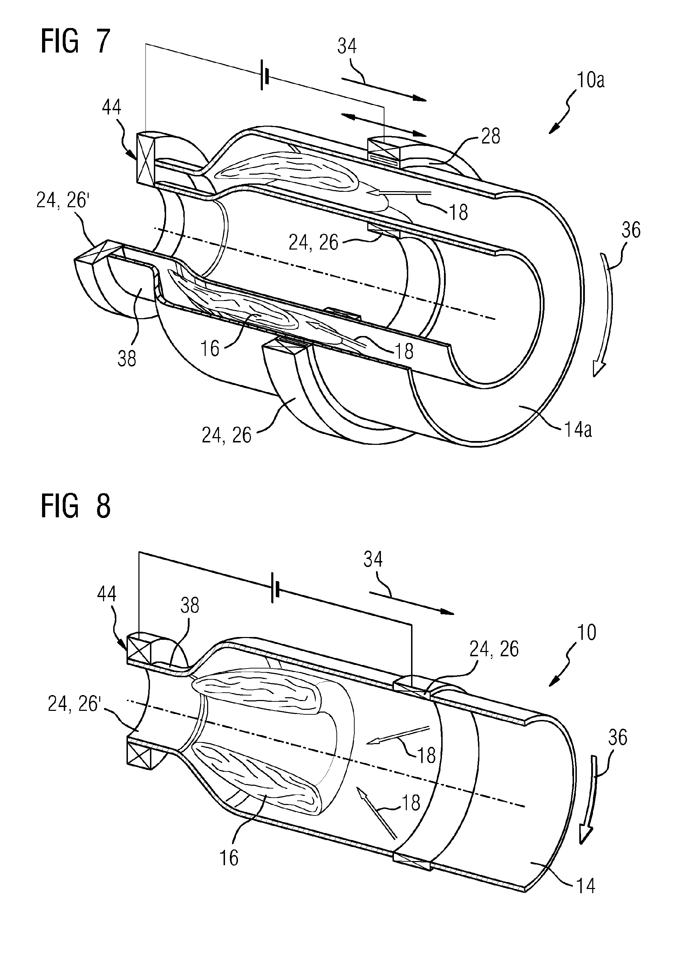

FIG 7 and 8 show two alternative exemplary embodiments of the combustion chamber 14. Identical components, features and functions are denoted by the same reference numerals. However, to distinguish the exemplary embodiment of FIG 7 and 8 over that of FIG 1 to 6 the letter 'a' has been added to the reference numerals of the components that are designed differently in the exemplary embodiment of FIG 7 and 8. The description below is substantially limited to these differences compared to the exemplary embodiment of FIG 1 to 6, wherein reference is made to the description of the exemplary embodiment in FIG 1 to 6 with respect to identical components, features, and functions.

The combustion system 10a shown in FIG 7 differs from the combustion system 10 of FIG 1 to 6 in that the combustion system 10a is embodied with an annular combustion chamber 14a. Thus, two field sources 24 or electrodes 26 extend in circumferential direction 36 around the combustion chamber 14, one electrode 26 along an outer and the other electrode 26 along an inner circumference of the combustion chamber 14a.

The combustion system 10b shown in FIG 8 differs from the combustion system 10 of FIG 1 to 6 in that an electrode 26b of the combustion system 10b is formed integrally with the combustion chamber 14b. The electrode 26b extends in circumferential direction 36 along a circumference of the combustion chamber 14b.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Although the invention is illustrated and described in detail by the preferred embodiments, the invention is not limited by the examples disclosed, and other variations can be derived therefrom by a person skilled in the art without departing from the scope of the invention.

## Claims

1. Combustion system (10, 10a, 10b) of a flow engine (12) comprising a combustion chamber (14, 14a, 14b), wherein a main flame (16) is burnable that is a lean and cold flame, **characterised in that** an electric field (18) is provided to stabilise the main flame (16) in the combustion chamber (14, 14a, 14b).

2. Combustion system according to claim 1,
wherein the main flame (16) has an amount of power and the electric field (18) has an amount of power, wherein the power of the electrical field (18) is in a range between 0.001% and 10%, preferably between 0.005% and 5% and most preferably between 0.01% and 1% of the power of the main flame (16).

3. Combustion system according to claim 1 or 2,
wherein the electrical field (18) has square AC waveforms.

4. Combustion system according to any preceding claim,
wherein the electrical field (18) has a frequency between 1 Hz and 50 kHz.

5. Combustion system according to any one of claims 1 to 3,
wherein the electrical field (18) has a frequency between 50 kHz and 1 GHz.

6. Combustion system according to any preceding claim,
wherein the electric field (18) is a pulsed field.

7. Combustion system according to claim 6,
wherein a pulse (20) of the pulsed electrical field (18) has a pulse width (22), wherein the pulse width (22) is in a range between 0.1% and 90% of a pulse repetition time (PRT) of the pulsed electrical field (18).

8. Combustion system according to claim 6 or 7,
wherein a ratio between the pulse width (22) and a time between two pulses (20, 20') is in a range between 0.2 and 0.8 and is preferably basically 0.5.

9. Combustion system according to any one of claims 6 to 8,
wherein a pulse (20) of the pulsed electrical field (18) has a pulse width (22), wherein the pulse width (22) is in a range between 0.0001 ms and 5 ms.

10. Combustion system according to any preceding claim,
wherein the electrical field (18) is provided by a field source (24), which comprises at least one electrode (26, 26'; 26b, 26b') to apply the electric field (18), wherein the at least one electrode (26, 26'; 26b, 26b') is arranged circular around the combustion chamber (14, 14a, 14b).

11. Combustion system according to any one of claims 1 to 9,
wherein the electrical field (18) is provided by a field source (24), which comprises at least one electrode (26b, 26b') to apply the electric field (18), wherein the at least one electrode (26b, 26b') is formed integrally with the combustion chamber (14b).

12. Combustion system according to claim 10 or 11,
wherein the at least one electrode (26, 26b) is positively charged.

13. Combustion system according to claim 10 or 12,
wherein the at least one electrode (26) is connected to the combustion chamber (14, 14a) by at least one connector (28), wherein the at least one connector (28) is moveable in respect to the combustion chamber (14, 14a) so that the main flame (16) is moveable in the combustion chamber (14, 14a) by a varying location of the at least one electrode (26).

14. Combustion system according to any preceding claim,
wherein a production of NOₓ is reduceable by the use of the electric field (18).

15. A use of the combustion system (10, 10a, 10b) according to one of the claims 1 to 14 in a dry low emission combustion system.
